**Europäisches Patentamt**

**European Patent Office**

**Office européen des brevets**

(11) Veröffentlichungsnummer: **0 103 740**
**B1**

(12) **EUROPÄISCHE PATENTSCHRIFT**

(45) Veröffentlichungstag der Patentschrift:
30.03.88

(51) Int. Cl.⁴: **G 06 F 3/023**

(21) Anmeldenummer: **83107957.9**

(22) Anmeldetag: **11.08.83**

(54) Verfahren und Schaltungsanordnung zur Realisierung eines mehrsprachigen Videoterminals.

(30) Priorität: 11.08.82 HU 259682

(43) Veröffentlichungstag der Anmeldung:
28.03.84 Patentblatt 84/13

(45) Bekanntmachung des Hinweises auf die Patenterteilung:
30.03.88 Patentblatt 88/13

(84) Benannte Vertragsstaaten:
CH DE FR LI

(56) Entgegenhaltungen:
CH - A - 320 773

IBM TECHNICAL DISCLOSURE BULLETIN, Band 14, Nr. 1, Juni 1971, Seiten 63-65, New York, US; J.O. MITCHELL u.a.: "Combinational-character generation"
ELECTRONICS INTERNATIONAL, Band 54, Nr. 6, 24. März 1981, Seiten 44-48, New York, US; W.R. IVERSEN: "Terminal generates chinese characters"
COMPUTER DESIGN, Band 17, Nr. 1, Januar 1978, Seiten 30,35; Concord, US; Microcomputer-based color graphics system displays Arabic/Farsi"

(73) Patentinhaber: **MIKI Méréstechnikai Fejleszto Vállalat,** Vésö u. 3, H-1133 Budapest (HU)

(72) Erfinder: **Hamori, Ferenc, Mária u. 31, H-2030 Erd (HU)**
Erfinder: **Kömüves, Gábor, Néphadsereg u. 13, H-1055 Budapest (HU)**
Erfinder: **Lukacs, József, Dr., Várfok u. 16, H-1012 Budapest (HU)**
Erfinder: **Michaletzky, Sándor, Gerióczy u. 11, H-1052 Budapest (HU)**
Erfinder: **Nagy, Levente, Karinthy F. u. 32, H-1111 Budapest (HU)**
Erfinder: **Németh, István, Csaba u. 36, H-1122 Budapest (HU)**

(74) Vertreter: **Lehn, Werner, Dipl.-Ing. et al, Hoffmann, Eitle & Partner Patentanwälte Arabellastrasse 4, D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Betreiben eines universalen, wählbar mehrsprachigen Videoterminals, in dessen Verlauf eine separate Drucktaste für jeden Grundbuchstaben sowie eine Distanzdrucktaste betätigbar sind, sowie eine Schaltungsanordnung zur Durchführung des Verfahrens.

Aus dem IBM Technical Disclosure Bulletin, Vol. 14, Nr. 1, Juni 1971, ist eine Schaltungsanordnung bekannt, mit deren Hilfe Kombinationscharakter erzeugbar sind, so dass z.B. Selbstlaute mit entsprechenden Umlautakzenten über den Selbstlautkennzeichen in einem Charakterfeld versehen werden können. Auch ist es möglich, zwei Symbole zu überlappen, um auf diese Weise ein neues Kennzeichen zu schaffen. Die Anzeige erfolgt mittels einer Kathodenstrahlröhre (CRT). Diese bekannte Schaltungsanordnung enthält ROM-Speicher für die Speicherung der einzelnen Charakterbilder. Die bekannte Schaltungsanordnung eröffnet jedoch nicht die Möglichkeit für Kennzeichen bzw. Charakter mit mehreren Positionen bzw. Feldern. Solche Charakter sind beispielsweise in der arabischen Sprache zu finden.

Obwohl andere, gegenwärtig bekannte und als zeitgemäss anerkannte, ähnlichen Zwecken dienende Videoterminals aufgrund bestimmter Charakteristiken die an sie gestellten allgemeinen Forderungen befriedigen, ist ihre Verwendung infolge sonstiger wesentlicher Eigenschaften recht begrenzt.

Die zur Erhöhung der Wirksamkeit der Verbindung zwischen dem Menschen und dem Computer dienenden mehrsprachigen Videoterminals gewährleisten eine schnelle und angemehmerweise zustande bringbare Verbindung mit dem Computer, und zwar direkt oder über eine Datenübertragungslinie, und zwar dadurch, dass die Bedienungsperson neben ihrer Muttersprache nur eine Programmierungssprache beherrschen muss, da die Eingabe und Anzeige des Textes in der eigenen Muttersprache erfolgen.

Um nun die Verwendung zu vereinfachen, verfügen diese Terminals über eine Anschlussmöglichkeit für einen unabhängigen Drucker und eine Floppy Disc.

Alle bekannten Terminals bilden eine selbständige Einheit, die die alphanumerische Tastatur enthält, und zwar inbegriffen die zur Einstellung der Systemparameter dienenden Bedienungsorgane, die Aus- und Eingangs-Anpassungseinheiten, die Einheit für die Videosteuerung mit dem Frischbildspeicher, der Charaktergenerator, der Anzeigemonitor sowie die Speiseeinheit.

Aus den bekannten und im weiten Kreis verbreiteten Terminals sind die auf dem Prinzip der sogenannten «Bit-Map» funktionierenden Terminals zur Anzeige der Charakter der beliebig währbaren Sprachen am meisten geeignet. Die anzeigbaren Bildpunkte dieser Apparate können einzeln gesteuert werden.

Das bei der überwiegenden Mehrheit der bekannten Terminals zur Verwendung kommende Verfahren, die Art und Weise der Realisierung und die im Laufe der Verwirklichung verwendete Schaltungsanordnung ermöglichen – wohl in beschränktem Mass – die Anzeige der Buchstaben von mehreren Sprachen.

Bei allen diesen Terminals wird zu jedem Buchstaben einer oder mehrerer ausgewählter Sprachen je eine separate Drucktaste, des weiteren eine Distanzdrucktaste so verwendet, dass die einzelnen einheitlichen Buchstaben als Grundbuchstaben betrachtet werden. Durch einen Stromkreis wird sichergestellt, dass die nacheinander gedrückten Grundbuchstaben oder deren unterschiedliche Erscheinungsformen, wie z.B. die Majuskelen und Minuskelen, bei der Anzeige auf einander folgenden Charaktergebieten erzeugt werden, während durch das einmalige oder mehrmalige Drücken der Distanzdrucktaste die einzelnen Grundbuchstaben oder deren unterschiedliche Erscheinungsformen voneinander abgetrennt, in der Abhängigkeit der Zahl des Drückens der Distanzdrucktaste, unter Zwischenschaltung eines leeren Charaktergebiets, separat dargestellt werden.

Den das oben beschriebene Verfahren realisierenden Terminals können zwei Hauptgruppen zugeordnet werden.

Zu der einen Gruppe gehören alle Videoterminals, deren gesamter Charaktervorrat sich der wohlbekannten ASCII Codetabelle anpasst. Diese Apparate sind fähig, höchstens einhundertachtundzwanzig Codes oder Charakter zu unterscheiden bzw. anzuzeigen. Als solcher Apparat soll der Typ «VDT 52106» der Firma VIDEOTON erwähnt werden.

Die andere Gruppe wird von jenen Videoterminals gebildet, die die ASCII Codetabelle überlappt verwenden und im Laufe der Verarbeitung bzw. der Anzeige die den einzelnen Codes der einander überdeckenden Codevorrät entsprechenden Codes mit Hilfe von selektierenden Codes separiert werden. Als solche sollen die Videoterminals Cii Honeywell Bull «Questar» und COMTERM «Model 341/AB» erwähnt werden. Der Charaktervorrat aller zu dieser Gruppe gehörenden Videoterminals beträgt wenigstens das Doppelte, als jener der ersten Gruppe. Zwischen den beiden obenerwähnten Apparaten besteht der grundsätzliche Unterschied, dass der Honeywell-Apparat die selektierenden Codes statisch deutet, während der Apparat von COMTERM dynamisch interpretiert. Das heisst, dass während der erste Apparat den selektierenden Code nur zur statischen Designierung des entsprechenden Charaktergenerators, als einen Systemparameter verwendet, benutzt der letztere den selektierenden Code zu einem dynamischen «Herumblättern» in den beiden überdeckten ASCII Codevorräten, wodurch das beliebige Vermischen der Buchstaben der verschiedenen Sprachen auf dem Bildschirm des Anzeigers ermöglicht wird.

Die bekannten Terminals verfügen – auf Grunde ihrer während der Realisierung verwendeten Schaltungsanordnungen – über die unten detaillierten gemeinsamen Eigenschaften:

Die Eingabe der Systemparameter erfolgt in den einschreibbaren-lesbaren Speicher, z.B. Ferrit oder CMOS-RAM von einem Schalter oder Drucktaste her.

Die Videosteuerung und Bildfrischeinheit sind auf einem Grundelement aufgebaut, das aus TTL-Stromkreisen aufgebaut werden kann, oder einen der bekannten programmierbaren CRT-Steuerstromkreise darstellt.

Der Charaktergenerator ist ein ROM oder ein EPROM.

Alle bekannten Apparate sichern einige, die Bedienung erleichternde oder die Zuverlässigkeit erhöhende Mehrdienstleistungen, so z.B. die Anzeige der eingestellten Systemparameter auf dem Bildschirm oder digitale Regelung der Lichtstärke usw.

Die auf dem Prinzip der sogenannten «Bit-Map» funktionierenden Apparate sind zur Anzeige beliebiger Buchstabenformen geeignet. Infolge des komplizierten Hardware- und Softwareaufbaues sind sie äusserst teuer. So ist ihre Verwendung als ein mehrsprachiges Videoterminal äusserst unwirtschaftlich. Aus den das übliche Verfahren realisierenden Terminals sind diejenigen, die über einen eine ASCII-Codetabelle ausfüllenden Charaktervorrat verfügen, so z.B. die VIDEOTON-Apparate, mit lateinischem und kyrillischem Charaktervorrat versehen. Diese Terminals lassen anstatt der lateinischen Minuskulen die Kyrillbuchstaben erscheinen. Trotzdem sind sie infolge ihres geringen Charaktervorrats zur Verwendung als mehrsprachiges Terminal ungeeignet.

Aus den die ASCII Codetabelle überdeckend verwendenden Terminals sind diejenigen, die den selektierenden Code als Systemparameter verwenden, so z.B. der Honeywell-Apparat, nur – im Wesen betrachtet – einsprachige Lösungen. Sie sind lediglich zur Anzeige der Schriftzeichen der auf dem lateinischen Buchstabenvorrat beruhenden Sprachen, wie z.B. der deutschen und der französischen Sprache geeignet. Sie ermöglichen keineswegs die gleichzeitige Anzeige der Charakter der wählbaren Sprachen. Der Wechsel der Sprachenweise kann nur schwierig, mit der Umstellung der z.B. an der Rückseite angeordneten Schiebeschalter und durch Auswechsel der Tastatur vorgenommen werden.

Die den selektierenden Code «dynamisch» verwendenden alphanumerischen Videoterminals sichern mit Hilfe der den reduzierten Charaktervorrat der beide Sprachen enthaltenden Tastatur, sowie der den selektierenden Code generierenden Taste die simultane Anzeigbarkeit der Charakter der beiden Sprachen. Der als Beispiel erwähnte Apparat COMTERM «Model 341/A/B» ist mit Hilfe der entsprechend grossen Charaktermatrix und der 16-Bit zentralen Steuereinheit zur kalligraphisch richtigen Anzeige der lateinischen und arabischen Basischarakter geeignet. Durch den textanalysierenden Algorithmus werden die Konsonanten, sowie deren von der in dem Text eingenommenen Stelle abhängige Formen, grammatisch richtig, in gebundener Form angezeigt. Bei gewissen Sprachen, wie z.B. der arabischen, usw.

werden die Selbstlaute, die zur Verdoppelung der Konsonanten dienenden Zeichen usw. unter oder über die Konsonanten geschrieben. Zu einer literarisch und grammatisch richtigen Anzeige sind jedoch die zu dieser Gruppe gehörenden Terminals keineswegs geeignet.

In der Hinsicht der Ausführungsform weisen die bekannten alphanumerischen Videoterminals die folgenden Nachteile auf:

Die Eingabe der Systemparameter von einem Schalter stellt eine unbequeme, kostenaufwendige und infolge der Verwendung der mechanischen Schalter eine unzuverlässige Lösung dar. Infolge der Speicherung der eingestellten Systemparameter in dem Ferritspeicher und der äusserst komplizierten Steuerung ist die Lösung mit hohen Kosten verbunden. Obwohl die Speicherung im CMOS-RAM weniger kostenaufwendig ist, können die die pausenlose Speiseversorgung der Speicher sicherstellenden Akkumulatoren infolge eines langfristigen Stromausfalls während des Transports erschöpft oder schadhaft werden, wodurch eine Wartung beansprucht wird. Der gemeinsame Nachteil beider Speicherungsweisen besteht darin, dass sie infolge ihrer Störempfindlichkeit recht unzuverlässig sind und einen sorgfältigen Schriftschutz beanspruchen.

Die aus den TTL-Stromkreisen aufgebauten Videosteuer- und Bildfrischeinheiten stellen infolge der aus vielen Elementen aufgebauten, komplizierten Schaltung eine unzeitgemässe, schwierig steuerbare, kostenaufwendige Lösung dar. Der an den einen der bekannten CRT-Kontroller verwendenden Bildfrischeinheiten anschliessbare Charaktergenerator kann nur an sieben Bits adressiert werden. Die programmierbare Charaktermatrix kann eine Höhe von höchstens sechszehn Rastern aufweisen. Auf diese Weise sind sowohl der Charaktergenerator, wie auch die zur Anzeige der Buchstaben verwendbare Matrixhöhe zur wirklichkeitstreuen, literarisch und grammatisch richtigen Anzeige von sogenannten gebundenen Schriften, wie z.B. der arabischen usw., ungeeignet.

Ein weiterer Nachteil der bekannten Lösungen besteht darin, dass je Charakterzeile Video-Reversvideo und Attributumwechsel nur in beschränkter Zahl, – höchstens sechzehn – möglich sind, die Verdoppelung der einzelnen Charakter weder horizontal, noch vertikal ermöglicht wird, was bei gewissen Anwendungen nützlich sein kann. Zwar führen die bekannten Apparate eine Textanalyse durch, was die Anzeige der verschiedenen Buchstabenform der zu den einzelnen Codes gehörenden Charakter mit einem reduzierten Codevorrat ermöglicht, jedoch ist keiner der Apparate zur Befriedigung der Forderung der Charakteristik der gebundenen Schriftarten geeignet, indem zu zwei verschiedenen Codes gehörende Charakter an der gleichen Charakterposition gleichzeitig angezeigt werden müssen, wie z.B. bei der arabischen Sprache die Selbstlaute und die Verdoppelungszeichen der Konsonanten usw. als «Akzentuation» auszuschreiben sind, und zwar derweise, dass zwischen den zu einem ankommenden Code gehörenden Konsonanten auch solche vorhanden sind, die zwei Charakterpositionen beanspruchen. Weder sind sie dazu geeignet, auf Wirkung eines eintreffenden Codes zwei oder mehrere Charakter oder Charakterelemente an der gleichen Charakterposition erscheinen zu lassen. Der Charaktergenerator der bekannten Apparate kann nur durch Austausch geändert werden (z.B. ROM), oder durch Neubrennen dem Löschen folgend (z.B. EPROM). Eine einfache Charaktermodifizierung, z.B. von der Tastatur oder vom Floppy Disc her, wird überhaupt nicht ermöglicht.

Der Erfindung liegt nun die Aufgabe zugrunde, ein Verfahren zum Betreiben eines universalen, wählbar mehrsprachigen Videoterminals sowie eine Schaltungsanordnung zur Durchführung des Verfahrens der eingangs genannten Art zu schaffen, das es ermöglichen soll, dass für beliebig ausgewählte Sprachen eine Charakterposition oder mehrere Charakterpositionen zur Anzeige eines Schriftzeichens verwendet wird oder werden, wobei der Charakter oder das Schriftzeichen aus mehreren Charakterelementen zusammengesetzt sein kann, um in sicherer und einfacher Weise bei einfacher Bedienung die Charakterelemente der ausgewählten Sprachen beliebig mischen zu können.

Gelöst wird diese Aufgabe dadurch, dass bei Schriften, bei denen Selbstlaute bzw. Akzentuationen als über oder unter Konsonanten angeordnete ergänzende Zeichen verwendet werden, die Konsonanten oder eine Erscheinungsform derselben als selbständige Grundbuchstaben betrachtet werden, während für die Selbstlaute bzw. für eine Akzentuation je eine Drucktaste verwendet wird, dass durch Stromkreise sichergestellt wird, dass der Konsonant und der folgende Selbstlaut bzw. die Akzentuation, wenn die entsprechenden Drucktasten unmittelbar nacheinander betätigt werden, bei der Anzeige auf demselben Charaktergebiet generiert werden, und dass bei Drücken der Distanztaste zwischen der jeweiligen Betätigung der Drucktasten für einen Konsonanten und einen Selbstlaut bzw. für eine weitere Akzentuation der Selbstlaut bzw. die weitere Akzentuation jeweils auf einem separaten Charaktergebiet dargestellt werden.

Hieraus ergibt sich der Vorteil, dass mit Hilfe der Distanztaste ein Konsonant und ein Selbstlaut bzw. eine weitere Akzentuation auf einem getrennten Charaktergebiet dargestellt werden können, während bei Nichtbetätigung dieser Drucktaste die Darstellung auf einem Charakterfeld erfolgt. Mit Hilfe des mehrsprachigen Videoterminals wird die Verwendung einer oder mehrerer Charakterpositionen zur Anzeige eines Schriftzeichens ermöglicht. Auch kann ein Schriftzeichen auf einer Position oder aber auch auf mehreren Positionen zusammengestellt werden, wobei mehrere grafische Elemente oder Charakterelemente vorhanden sind. Auf diese Weise wird die kalligrafisch, literarisch und grammatisch richtige Anzeige aller Charakter der beliebig ausgewählten Sprachen mit Hilfe des alphanumerischen Videoterminals so ermöglicht, dass die Charakter der ausgewählten Sprachen beliebig gemischt werden können.

Bei auf einem lateinischen Buchstabenvorrat beruhenden Schriften werden die Buchstaben ohne Akzent als selbständige Basisbuchstaben angesehen, während für alle Arten der über oder unter den Basisbuchstaben verwendeten Akzente je eine Drucktaste verwendet wird. Gleichzeitig wird auch hier mit Hilfe von Stromkreisen sichergestellt, dass der nacheinander gedrückte Basisbuchstabe und der darauffolgende Akzent innerhalb des gleichen Charaktergebietes erzeugt werden. Hingegen wird bei Drücken der Distanztaste zwischen der jeweiligen Betätigung der Drucktasten für einen Konsonanten und einen Selbstlaut bzw. für eine weitere Akzentuation der Selbstlaut bzw. die weitere Akzentuation jeweils auf einem separaten Charaktergebiet dargestellt.

Die Aufgabe wird auch durch eine Schaltungsanordnung zur Verwirklichung eines mehrsprachigen Videoterminals gelöst, enthaltend eine sich einem insbesondere parallel ausgebildeten Schienensystem anschliessende zentrale Steuerung, eine Tastatur, eine Systemparameter speichernde Einheit, eine Interfacesystem, eine Videosteuerung, einen Charaktergenerator, einen sich dem Charaktergenerator und der Videosteuerung anschliessenden Videoprozessor und einen mit dem Videoprozessor verbundenen Monitor, und zwar dadurch, dass die Videosteuerung einen Charakter-Verlängerer, der die Anzeige bzw. Darstellung eines Charakters einer Schriftart bzw. Sprache (Code) auf zwei benachbarten Charaktergebieten sicherstellt, und einen Charakter-Addierer enthält, die über einen CRT-Controller sich dem Schienensystem und über einen Wähler dem Charaktergenerator anschliessen, und dass des weiteren der Charakter-Addierer auch unmittelbar mit dem Videoprozessor verbunden ist.

Zur Verwirklichung des erfindungsgemässen Verfahrens weist das Terminal nicht nur herkömmliche alphanumerische Anzeigeelemente sondern auch eine 8-Bit CPU auf. Auf diese Weise wird das mehrsprachige Videoterminal ein einfach aufgebauter, billig produzierbarer, zuverlässig funktionierender mehrsprachiger Apparat, der einfach bedienbar ist und einfach instandgehalten werden kann und darüber hinaus universal wählbar ist. Ausserdem ist dieses mehrsprachige Videoterminal so ausgestattet, dass es neben den grafischen Elementen auch die gleichzeitige, proportional und grammatisch richtige, hohe ästhetische Forderungen befriedigende Anzeige von beliebig ausgewählten Schriften, z.B. lateinischen und gebundenen Schriften, mit komplizierter Kalligrafie, z.B. mit arabischer Kalligrafie, mit allen möglichen Buchstabenformen ermöglicht, und zwar derart, dass die ausgewählten Charakter der Sprachen einfach und nach Wunsch gemischt werden können.

Insbesondere eignet sich das Videoterminal als lateinisch-arabisch-sprachiges Terminal. Es verarbeitet die am traditionellen Datenverkehr zwischen dem Menschen und dem Computer teilnehmenden Daten. Des weiteren wird eines 8-Bit CPU-Steuereinheit verwendet, die zur Eingabe der Befehle und zur Statusanzeige eine geeignete Tastatur aufweist. Als Speicher wird in vorteilhafter Weise ein EEPROM verwendet, welcher den Vorteil aufweist, dass er löschbar und programmierbar ist. Mit Hilfe des Charakter-Verlängerers und mit Hilfe des Charakter-Addierers werden bei entsprechender Betätigung der infrage kommenden Tasten Charakter auf ein und demselben Charaktergebiet oder aber auf getrennten Charaktergebieten dargestellt.

Bei einer vorteilhaften Ausführungsform kann der Charaktergenerator des Videoterminals von aussen her gefüllt bzw. angesteuert werden, und zwar über die Tastatur oder über die Floppy Disc. In vorteilhafter Weise enthält die Videosteuerung zwei gemeinsam und auch separat programmierbare CRT-Controller.

Im folgenden wird die Erfindung anhand einiger, in den Figuren dargestellter Ausführungsbeispiele näher beschrieben. Es zeigen:
Figur 1 eine mögliche Ausführungsform des erfindungsgemässen mehrsprachigen Videoterminals in Form eines zu diesem Zwecke vereinfachten und verallgemeinerten Blockschemas,

Figur 2a das Blockschema der zentralen Steuereinheit des erfindungsgemässen mehrsprachigen Videoterminals,

Figur 2b eine mögliche Ausführungsform der die Systemparameter Speichernden Einheit,

Figur 3 eine mögliche Ausführung des erfindungsgemässen Videoterminals mit der Videosteuerung, in einer zu diesem Zwecke vereinfachten Form, und

Figur 4 eine mögliche Ausführung des Charaktergenerators des erfindungsgemässen mehrsprachigen Videoterminals in Form eines Blockschemas.

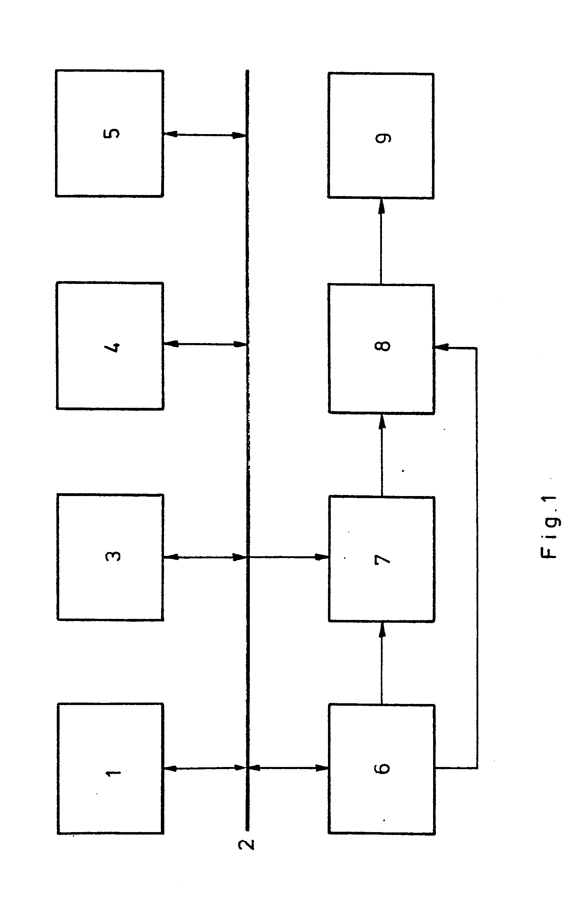

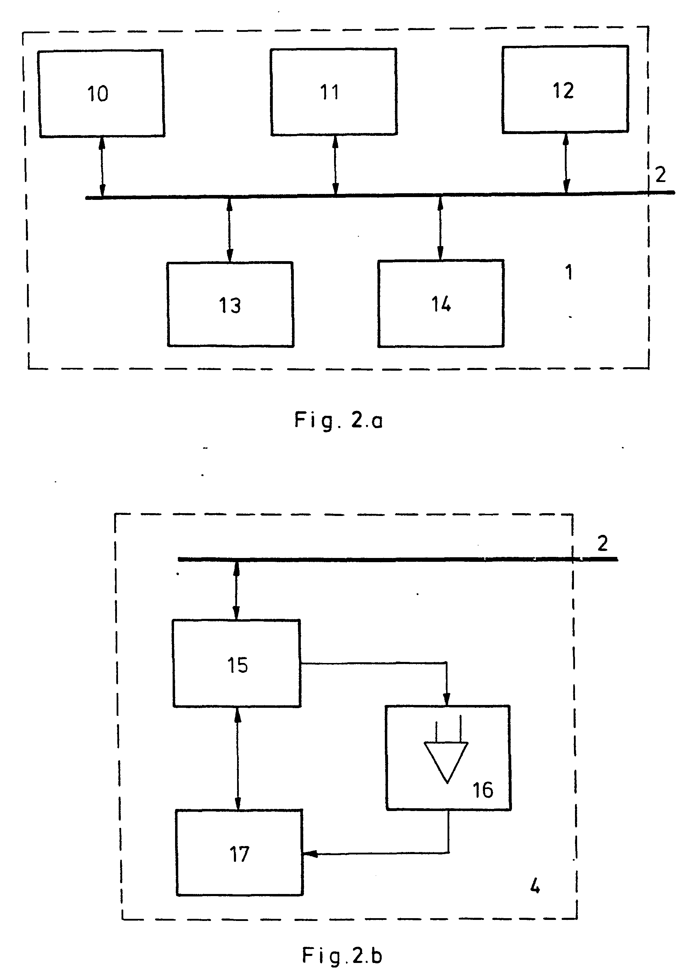

Wie es aus der Figur 1 ersichtlich ist, wird das mehrsprachige Videoterminal durch die zentrale Steuerung 1, das parallele Schienensystem 2, die daran mit einer zweiwegigen Verbindung anschliessende Tastatur 3, die die Systemparameter Speichernde Einheit 4, das Interface-System 5, die Videosteuerung 6 und durch den mit der Videosteuerung und dem parallelen Schienensystem 2 durch eine einwegige Verbindung angeschlossenen Charaktergenerator 7, durch den damit und der Videosteuerung 6 in einwegiger Verbindung stehenden Videoprozessor 8 und durch den die Anzeige ausführenden Monitor 12 gebildet. Wie aus der Figur 2a ersichtlich ist, wird die zentrale Steuereinheit 1 durch eine CPU 10, durch einen damit über das parallele Schienensystem 2 mit einer zweiwegigen Verbindung anschliessenden RAM-Speicher 11, einen EPROM-Speicher 12, einen Unterbrecher 13 und eine Steuereinheit DMA 14 gebildet.

Die Tastatur 3 besteht aus den Befehl- und Charaktertasten, auf deren Knopfkappen deren die einheitliche Buchstabengarnitur von mindestens zwei Sprachen aufgetragen ist, aus der Distanztaste, den Statusanzeigern, z.B. LED-Dioden, desweiteren aus dem die zweiwegige Verbindung zwischen der Tastatur 3 und dem das parallelen Schienensystem 2 sicherstellenden Anpassstromkreis.

Wie aus Figur 2b eindeutig hervorgeht, wird die die Systemparameter speichernde Einheit 4 aus der die zweiwegige Verbindung zu dem parallelen Schienensystem 2 sicherstellenden Peripherie-Anpasseinheit 15, aus dem Parameter – Einbrenner 16, sowie aus dem mit beiden in Verbindung stehenden Parameter-EPROM-Speicher 17 gebildet.

Das Interface-System 5 besteht aus dem Drukker, der Floppy Disc, und der Linieninterface-Einheit.

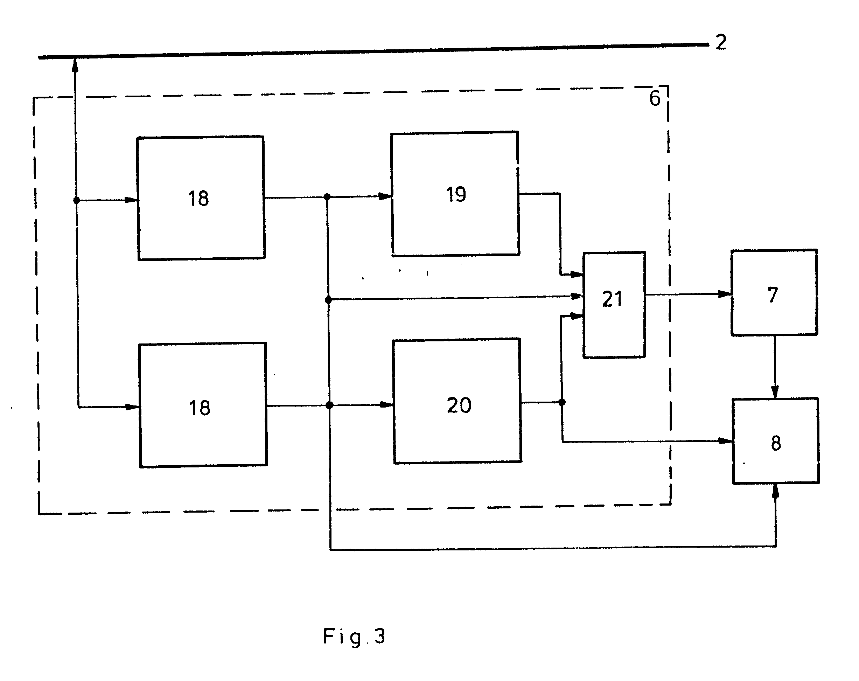

Wie es aus der Figur 3 ersichtlich ist, wird die Videosteuerung 6 aus den beiden, mit dem parallelen Schienensystem 2 in zweiwegiger Verbindung stehenden, zusammen und separat programmierbaren CRT-Kontrollern 18, aus dem damit in einer einwegigen Verbindung stehenden, aus TTL-Elementen aufgebauten Charakter-Verlängerer 19, dem Charakter-Addierer 20, sowie aus der Charakter-Trenneinheit 21 gebildet.

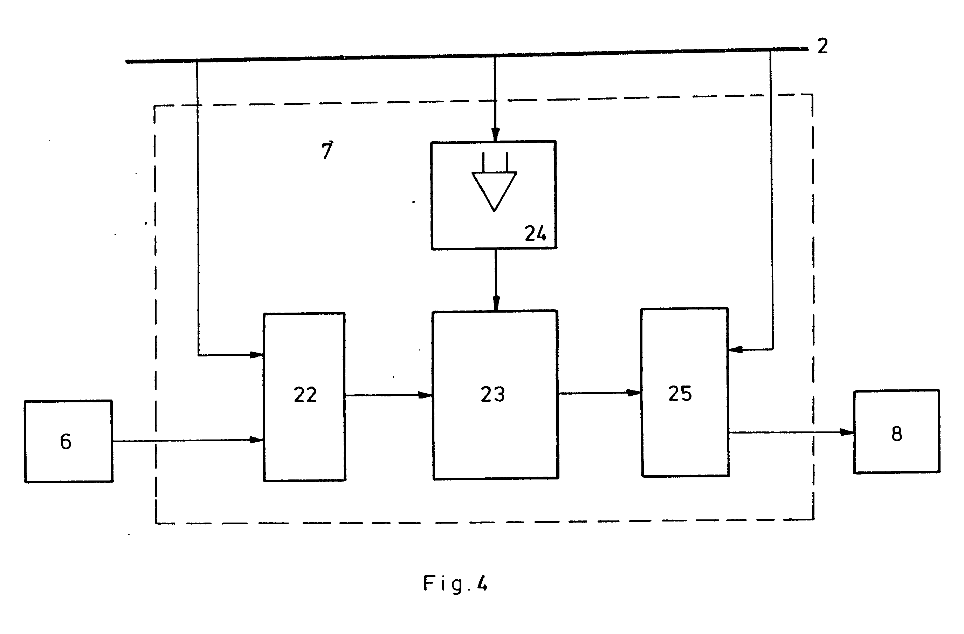

Wie es aus der Figur 4 ersichtlich ist, besteht der Charaktergenerator 7 aus dem mit dem parallelen Schienensystem 2 und der Videosteuerung 6 in einer einwegigen Verbindung stehenden Adressenselektor 22, dem Charakter-EPROM-Speicher 23, dem Charakter-Einbrenner 24, sowie aus dem, mit dem parallelen Schienensystem 2 und mit dem Videoprozessor 8 in einer einwegigen, mit dem Charakter-EPROM Speicher 23 in einer zweiwegigen Verbindung stehenden Datenselektor 25.

Der Videoprozessor 8 besteht aus den zeilenbildenden, Video- und Synchronsignal bildenden, sowie aus den digitalen zur Regelung der Lichtstärke bildenden Einheiten.

Der Monitor 9 wird von der üblichen Videostufe, der Bildröhre und von der zur Erzeugung der zur Funktion erforderlichen Spannungen liefernden Speiseeinheit gebildet.

Die Funktion des erfindungsgemässen Videoterminals wird im Sinne des erfindungsgemässen Verfahrens von der zentralen Steuerung 1 – mit Hilfe der 8-Bit CPU 10, des RAM-Speichers 11 und des EPROM-Speichers 12, sowie des Unterbrechers 13 und der Steuerung DMA 14 – nach dem in dem Mikroprogramm enthaltenen Algorithmus, unter Anwendung des parallelen Schienensystems 2 – gesteuert.

Die Tastatur 3 sichert mit ihren spezielle Funktionen sicherstellenden, die Systemparameter einstellenden, die Sprachweise auswählenden, eine Selbstprüfung sichernden, alphanumerischen und numerischen Tasten, sowie mit Hilfe der Anzeiger eine einfache, bequeme und schnelle Eingabe der Daten und Befehle und desweiteren eine Statusanzeige dadurch, dass der Operator z.B. bei der arabischen Sprache durch die einen reduzierten Charaktervorrat enthaltende Tastatur 3, sowie durch die Text- und Textendanalyse keinen Entschluss über die Textumgebungsanalyse treffen muss.

Die die Systemparameter durch Eingabe berücksichtigende Einheit 4 dient zum Einbrennen und zum Speichern der von der Tastatur 3 definierten Systemparameter. Sie speichert den Speicherinhalt auch nach erfolgtem Ausschalten des Apparats. Die Einheit ist gegenüber äusseren Störungen unempfindlich. Ein Schriftschutz wird nicht beansprucht. Der Inhalt kann leicht geändert werden. Hier werden z.B. die sich auf die Betriebsweise (asynchron, synchron), auf das Linienprotokoll (Teletype, Honeywell VIP 7700; IBM 3270;), auf die Betriebsweise der Datenübertragung (Duplex, Halbduplex), auf die Geschwindigkeit der Datenübertragung, auf den ausgewählten Charaktervorrat usw. beziehenden Daten gespeichert.

Das Videoterminal hält die Zweiweg-Verbindung mit dem Computer, dem Drucker und der Floppy Disc über das Interface-System 5 aufrecht.

Im Laufe des durch das Interface-System 5 abgewickelten zweiwegigen Datenverkehrs wird ein wo immer mit dem selektierenden Code versehener, reduzierter, für das Terminal sequentiell deutbarer Codevorrat verwendet.

Die Steuerung der Anzeige auf dem Monitor 9, sowie die Bild-Auffrischung wird von der programmierbaren Videosteuerung 6 mit Hilfe des damit eine integrierte Einheit bildenden Charakter-Verlängers 19, des Charakter-Addierers 20, sowie des Charaktergenerators 7 vorgenommen.

Durch die Gestaltung der Videosteuerung 6 kann die Dimension des Charaktergenerators 7 bedeutend erhöht werden. Desweiteren besteht die Möglichkeit, zusätzliche, von dem die Analyse der Textumgebung und Textendes durchführenden Algorithmus gesteuerte Bits zu verwenden, und zwar zur Betätigung des Videoprozessors 8, der mit Hilfe des Addierers 20 die «ODER»-Verbindung der Videosignale einerseits des Charakter-Verlängers 19, der die Anzeige des zu ein und demselben Code gehörenden, zwei nebeneinander liegende Stellen einnehmenden Charakters sicherstellt, und anderseits der zu einem Code gehörenden zahlreichen Charakterelemente oder des zu mehreren Codes gehörenden, aber in einer Position anzeigbaren Charakterelements verwirklicht.

Ein weiterer Vorteil der Videosteuerung besteht darin, dass das Grundmass der Charaktermatrix der Höhe von vierundzwanzig Rastern und der Breite von sechszehn Rastern entspricht, dass für den Videoprozessor 8 zusätzliche steuerbare Bits für Video-Reversvideo, das Blinken und den Wechsel der Attributen sichern, wodurch deren Wechsel je Bildzeile überhaupt nicht beschränkt ist.

Der Charaktergenerator 7 ist für die zentrale Steuerung 1 unmittelbar zugänglich. Falls ein füllbarer Speicher, z.B. EPROM verwendet wird, wird die Auffüllung von aussen her, z.B. von der Tastatur 3 oder dem Interface-System 5 her, von der Floppy Disc sichergestellt.

Der aus den TTL und programmierbaren LSI Elementen aufgebaute Videoprozessor 8 empfängt und verarbeitet die Signale der Videosteuerung 6, des Charakter-Addierers 20 und des Charaktergenerators 7.

Es wird ermöglicht, einen Charakter auf mehreren Bildpositionen erscheinen zu lassen, oder mehrere Charakter oder Charakterelemente auf der gleichen Bildposition anzuzeigen. Der Apparat reiht in Zeilen den Code, der den aus dem Charaktergenerator parallel ankommenden Charakter oder ein Charakterelement repräsentiert, und erzeugt die zur Betätigung des Monitors 9 erforderlichen Video- und Synchronsignale.

Darüber hinaus, sichert der Apparat in einer konzentrierten Weise die die Bedienung des Terminals vereinfachenden und die Zuverlässigkeit erhöhenden Dienstleistungen, wie z.B. Roll- und Rollfunktion je Bildzeile, digitale Regelung der Lichtstärke, die übrigens so gesteuert wird, dass falls eine mit Programm veränderbare Zeit lang weder Datenverkehr in der Linie, noch Intervention seitens des Operators wahrgenommen wird, die Lichtstärke auf das Minimum herabgesetzt wird. Nachdem der Datenverkehr wiederholt in Gang gesetzt wird, stellt der Apparat die früher eingestellte Lichtstärke zurück.

Der Betrieb des erfindungsgemässen wählbar mehrsprachigen Videoterminals wird anhand des Blockschemas der Fig. 1 bis 4 in folgender Weise erläutert.

Bei der Beschreibung des Betriebes wird angenommen, dass die gewünschte Sprache bereits gewählt worden ist. Das bedeutet, dass die Charakterdrucktasten der Tastatur 3 bereits mit den Drucktastenkappen versehen sind, die den gesamten oder reduzierten Vorrat an Charakter oder Charakterelementen darstellen. Des weiteren hat zuvor die Auffüllung des Charaktergenerators 7 in den EPROM-Speicher oder EEPROM-Speicher aus der Tastatur 3, oder unter Zuhilfenahme des Interface-Systems von der Floppy-Disc stattgefunden.

Nach erfolgter Einschaltung führt der Apparat ein selbstdiagnostisches Programm durch, und zwar mit Hilfe des Speichers der zentralen Steuerung 1, des Interface-Systems 5, sowie der Tastatur 3 durch. Das Prüfergebnis erscheint eventuell unter genauer Angabe der Fehlerstelle, auf dem Bildschirm des Monitors 9.

Nach dem Ablauf des selbstdiagnostischen Programms werden mit Hilfe der Tastatur 3 die aktuellen Systemparameter in den EEPROM-Speicher der die Systemparameter durch Eingabe berücksichtigenden Einheit 4 gewählt und eingebrannt.

Die Betriebsweise des Terminals wird beispielweise in der lateinischen-arabischen Sprachweise, der Einfachheit halber, bei einer je Charakter erfolgenden Übertragung beschrieben.

Wenn nun eine der Tasten der Tastatur 3 gedrückt wird, nimmt dies die zentrale Steuerung 1 als Unterbrechung wahr, liest den Code der Taste ein und bestimmt, ob sie eine Funktions- oder Charaktercode erhalten hatte. Sollte der eingelesene Code einen Befehl enthalten, wird der Befehl ausgeführt. Wenn jedoch eine Charaktertaste gedrückt worden ist, hängen die weiteren Schritte von der eingestellten Grundsprachenweise ab.

Die Charakter der ausgewählten Sprachen sind in der wohlbekannten 7-Bit-ASCII-Codetabelle

überdeckt angeordnet. Die Auswahl der aktuellen Grundsprache aus den einander überdeckenden ASCII-Tabellen erfolgt mittels der selektierenden Codes, z.B. unter Zuhilfenahme der Sprachweiseschalter der Tastatur 3. Beim vorliegenden Beispiel werden lateinische und arabische Sprachweisen gewählt. Dabei besteht die Möglichkeit, durch die Generierung eines Spezialcodes, unter Beibehaltung der Grundsprache auch die Charakter einer anderen Sprache dazwischenzuschalten. Diese ist die sogenannte «Einschaltsbetriebsweise», die durch die Generierung eines speziellen selektierenden Codes, z.B. mit dem zu diesem Zwecke dienenden Drucktaste der Tastatur 3, initiiert werden kann.

Bei der Wahl der lateinischen Grundsprachweise gehören zu jeder Charakterdrucktaste der Tastatur die Majuskel- und Minuskelform des an der Drucktastenkappe angeführten Charakters. Auf diese Weise interpretiert die zentrale Steuerung 1 die Charakterdrucktasten einfach nach dem Code der Drucktaste. Die Videosteuerung 6 wird dementsprechend programmiert, die den am Ausgang der Charaktergenerators 7 erscheinenden Code in die in Zeilen einreihende Einheit des Videoprozessors 8 weiterleitet. Der Programmierung des Videoprozessors 8 entsprechend, lässt der Apparat über den Lichtstärkeregler auf dem Bildschirm des Monitors 9 die der gedrückten Drucktaste entsprechende lateinische Charakterform von links nach rechts erscheinen, was in der lateinischen Grundsprachenweise der normalen Eingabe entspricht. Wenn nun ein Datum an der Linie eintrifft, findet die Anzeige gleicherweise statt, jedoch mit dem Unterschied, dass in diesem Fall der Code des Charakters über das Interface-System 5 in das Videoterminal gelangt.

Wenn nun arabische Sprachweise gewählt wird, interpretieren die Videosteuerung 6 und der Videoprozessor 8 aufgrund des selektierenden Codes den von der Tastatur 3 oder dem Interface-System 5 her ankommenden Code im Sinne der arabischen Sprachweise, wobei im Laufe der Anzeige der Charaktergenerator 7 den arabischen Charaktervorrat benutzt. Das erste sichtbare Zeichen besteht darin, dass auf dem Bildschrim des Monitors 9 der Cursor in die äusserste rechte Position der aktuellen Zeile verlegt wird, wobei aus den Charaktern diejenigen, die Buchstaben bezeichnen, von rechts nach links, und diejenigen, die Zahlen bezeichnen, von links nach rechts verschoben erscheinen, was den Regeln der arabischen Schriftsweise entspricht. Bei dieser Sprachweise entsprechen jedem an dem Drucktastenkappen vorhandenen Charakter bzw. jedem von dem Interface-System 5 herkommenden Charakter im allgemeinen viererlei anzeigbare graphische Formen. Welche Charakterform nun von den vier möglichen Formen auszuwählen und mit Hilfe der Videosteuerung 6, des Charaktergenerators 7 und des Videoprozessors 8 auf dem Bildschirm des Monitors 9 anzuzeigen ist, wird immer von der Eigenartigkeit des Charakters, dessen Position und von dem Code des darauffolgenden Charakters – nach den Regeln der Textanalyse und der Textendanalyse – bestimmt. Auf Wirkung des von der Tastatur 3 oder dem Interface-System 5 her eintreffenden Codes bestimmt die Videosteuerung 6, ob ein eine oder zwei horizontale Positionen einnehmender Charakter anzuzeigen ist. Dementsprechend werden dann der Charakter-Verlänger 19, der Charaktergenerator 7, sowie der Videoprozessor 8 gesteuert.

Sollte der eintreffende Code ein Selbstlaut sein, steuert die Videosteuerung 6 den Charakter-Addierer 20, den Charaktergenerator 7 und den Videoprozessor 8 so, dass der Selbstlaut und das Videosignal des vorangehenden Charakters in eine «ODER»-Verbindung geratend zum Bildschirm des Monitors 9 gelangt, wodurch die beiden Charakter auf demselben Charaktergebiet erscheinen.

Wenn nun der Terminalwagen einen Reverscode (CR) oder einen die arabische Sprache beendenden, sich auf den Sprachwechsel beziehenden Code erhält, der beim vorliegenden Beispiel eine Umstellung auf Lateinisch bedeutet, oder ein sogenanntes «Einschalten» vorzunehmen ist, wird der arabische Text nach den Regeln des textanalysierenden Algorithmus beendet, wodurch das grammatisch richtige Erscheinen der letzten Charakter sichergestellt wird.

Bei der Auswahl zweier oder mehrerer Sprachen, wie beim Beispiel der lateinischen und der arabischen, kann die Notwendigkeit bestehen, zwischen die Charakter der aktuellen Grundsprache, ohne die Grundsprache ändern zu müssen, die Charakter der gewählten anderen Sprache grammatisch richtig einzusetzen. Diese Möglichkeit wird durch die sogenannte «EINSCHALTSBETRIEBSWEISE» gegeben, die durch einen selektierenden Code ausgewählt wird und die durch Drücken einer Drucktaste in Gang gesetzt wird.

Diese Betriebsweise kann dadurch gekennzeichnet werden, dass die ankommenden Codes mit einer Interpretierung, die der der aktuellen Sprachweise entgegengesetzten Sprachweise entspricht, verarbeitet werden. In diesem Fall erfolgt die charakterisierende Dateneingabe mit Insert. Dadurch verschieben sich die angezeigten Charakter auf dem Bildschirm des Monitors 9, um sich der der aktuellen Sprachweise entgegengesetzten Dateneingabe anpassen zu können.

Im Laufe des obenbeschriebenen Betriebs des Videoterminals kann in der sogenannten ON LINE Betriebsweise die Verbindung zwischen dem Menschen und Computer realisiert werden. In dieser Betriebsweise führt die zentrale Steuerung 1 neben der Videosteuerung 6 auch die Steuerung des Interface-Systems durch. Auf diese Weise ergibt sich im Datenverkehr vom Menschen zu Computer, wenn die Taste der Tastatur 3 – die irgendwelchen Charakter, oder einen in dem Liniendatenverkehr interpretierten Code bezeichnet – gedrückt wird, neben der Anzeige auf dem Monitor 9 ein Liniendatenverkehr, falls die Übertragung je Charakter erfolgt.

Bei einem Datenverkehr in der entgegengesetzten Richtung empfängt das Videoterminal den von dem Computer her ankommenden Code über das

Interface-System 5 und lässt ihn dem selektierenden Code entsprechend, auf die früher beschriebene Weise auf dem Bildschirm des Monitors 9 erscheinen.

Insofern die Charakter nicht einzeln übertragen werden, d.h. die Charakter nicht einzeln mit Hilfe der Tastatur 3 in den Speicher der die Systemparameter durch Eingabe berücksichtigenden Einheit 4 gelangen, wird der Datenverkehr nach den Regeln des ausgewählten Linienprotokolls vor sich gehen.

Auf Wirkung des Befehls auf Drucken, unabhängig davon, ob sie von der Tastatur 3 oder dem Interface-System 5 her angekommen sind, werden die Codes der druckbaren Charakter mit den selektierenden Codes zusammen, unter Beachtung der sogenannten Hand-Shake-Signale, durch Anwendung des Interface-Systems 5 von der zentralen Steuerung 1 in den Drucker-Pufferspeicher gefüllt.

Das Interface-System 5 des Videoterminals ermöglicht auch der Anschluss der Floppy Disc. Diese wird von der zentralen Steuerung 1 gehandhabt. Die Floppy Disc kann in der üblichen Weise zur Datenspeicherung oder zur Auffüllung des Charaktergenerators 7 mit dem der gewählten Sprache entsprechenden Charaktervorrat verwendet werden.

Die zentrale Steuerung 1 füllt den Charaktergenerator 7 unter Anwendung des mit dem parallelen Schienensystem 2 gesteuerten Adressenselektors 22, des Datenselektors 25 und des Charakter-Einbrenners 24 auf.

Wie aus dem Vorhergesagten eindeutig hervorgeht, sind das den Gegenstand der Erfindung bildende Verfahren und die Schaltungsanordnung tatsächlich zur Beseitigung der nachteiligen Eigenschaften der bekannten Lösungen – unter gleichzeitiger Beibehaltung der Vorteile der gegenwärtig bekannten und anerkannten mehrsprachigen Videoterminals bestens geeignet. Die Auswahl und Eingabe, die Speicherung aller Systemparameter findet einfach und zuverlässig statt. Weder Störschutz noch Bedienung und Wartung werden beansprucht. Die eingestellten Parameter werden auch nach erfolgter Abschaltung der Netzspannung aufbewahrt.

Der aus Floppy Disc oder von der Tastatur 3 auffüllbare Charaktergenerator 7 kann den gewählten Sprachen entsprechend erweitert werden.

Die auf der 8-Bit-CPU 10 beruhende zentrale Steuerung 1 bestätigt eine software-orientierte, mit einfacher Hardware aufgebaute Videosteuerung 6, die infolge der gegenüber der üblichen viel grösser dimensionierten Charaktermatrix die Anzeige äusserst feiner Graphik ermöglicht.

Die programmierte «intelligente» Videosteuerung 6 und der Videoprozessor 8 ermöglichen die Verwendung einer oder mehrerer Charakterpositionen zur Anzeige eines Schriftzeichens. Anderseits kann ein Schriftzeichen auf einer Position oder mehreren Positionen, aus mehreren graphischen Elementen (Charakterelementen) zusammengestellt werden. Auf diese Weise wird die kalligraphisch, literarisch und grammatisch richtige Anzeige aller Charakter der beliebig ausgewählten Sprachen mit Hilfe des alphanumerischen Videoterminals so ermöglicht, dass die Charakter der ausgewählten Sprachen beliebig gemischt werden können.

Durch den einfachen Aufbau und die Eigenprüfung sichert der Apparat eine leichte Fehlerstellenfeststellung und einen leichten Service.

Elektronischer und mechanischer Aufbau sind zuverlässig. Eine sichere Betriebsführung und einfache Bedienung werden ermöglicht.

Infolge des hohen Wirkungsgrades der unmittelbar von dem Netz betätigten Speiseeinheit kann eine energieersparende Betriebsführung erreicht werden.

## Patentansprüche

1. Verfahren zum Betreiben eines universalen, wählbar mehrsprachigen Videoterminals, in dessen Verlauf eine separate Drucktaste für jeden Grund-Buchstaben sowie eine Distanzdrucktaste betätigbar sind, dadurch gekennzeichnet, dass bei Schriften, bei denen Selbstlaute bzw. Akzentuationen als über oder unter Konsonanten angeordnete ergänzende Zeichen verwendet werden, die Konsonanten oder eine Erscheinungsform derselben als selbständige Grundbuchstaben betrachtet werden, während für die Selbstlaute bzw. je eine Akzentuation je eine Drucktaste verwendet wird, dass durch Stromkreise sichergestellt wird, dass der Konsonant und der folgende Selbstlaut bzw. die Akzentuation, wenn die entsprechenden Drucktasten unmittelbar nacheinander betätigt werden, bei der Anzeige auf demselben Charaktergebiet generiert werden, und dass bei Drücken der Distanztaste zwischen der jeweiligen Betätigung der Drucktasten für einen Konsonanten und einen Selbstlaut bzw. für eine weitere Akzentuation der Selbstlaut bzw. die weitere Akzentuation jeweils auf einem separaten Charaktergebiet dargestellt werden.

2. Verfahren nach Anspruch 1, dadurch gekennzeichnet, dass bei auf dem lateinischen Buchstabenvorrat beruhenden Schriften die Buchstaben ohne Akzent als selbständige Grundbuchstaben angesehen werden, während für alle Arten der über oder unter den Grundbuchstaben verwendeten Akzente je eine Drucktaste verwendet wird.

3. Verfahren nach Anspruch 1 oder 2, dadurch gekennzeichnet, dass bei Schriftarten, bei denen die Buchstaben eines hochzahligen Buchstabenvorrats in Buchstabenelemente zerlegt werden können, diese Buchstabenelemente als selbständige Grundbuchstaben betrachtet werden, wobei jedem Grundbuchstaben durch Modifizierung von Drucktastenkappen eine der den Konsonanten, Selbstlauten bzw. Akzentuationen zugedachten Drucktasten zugeordnet wird.

4. Schaltungsanordnung zur Durchführung des Verfahrens nach einem der Ansprüche 1 bis 3 für die Verwirklichung eines mehrsprachigen Videoterminals, enthaltend eine sich einem insbesondere parallel ausgebildeten Schienensystem (2) anschliessende zentrale Steuerung (1), eine Tastatur (3), eine die Systemparameter speichernde Einheit (4), ein Interface-System (5), eine Videosteuerung (6), einen Charaktergenerator (7), einen sich dem Charaktergenerator (7) und der Videosteuerung (6) anschliessenden Videoprozessor (8) und einen mit dem Videoprozessor (8) verbundenen Monitor (9), dadurch gekennzeichnet, dass die Videosteuerung (6) einen Charakter-Verlängerer (19), der die Anzeige eines zu einem Code (Schriftart) gehörenden Charakters auf zwei nebeneinander liegenden Charaktergebieten sicherstellt, und einen Charakter-Addierer (20) enthält, die über einen CRT-Kontroller (18) sich dem Schienensystem (2) und über einen Wähler (21) dem Charaktergenerator (7) anschliessen, und dass des weiteren der Charakter-Addierer (20) auch unmittelbar mit dem Videoprozessor (8) verbunden ist.

5. Schaltungsanordnung nach Anspruch 4, dadurch gekennzeichnet, dass das Grundelement der Videosteuerung (6) von zwei gemeinsam und auch separat programmierbaren CRT-Kontrollern (18) gebildet ist, wobei die CRT-Kontroller (18) LSI-Stromkreise enthalten.

6. Schaltungsanordnung nach Anspruch 4, dadurch gekennzeichnet, dass die die Systemparameter durch Eingabe berücksichtigende Einheit (4) als Speicherelement einen an sich bekannten, elektronisch programmierbaren EEPROM-Stromkreis enthält.

7. Schaltungsanordnung nach Anspruch 4, dadurch gekennzeichnet, dass das Speicherelement des Charaktergenerators (7) durch einen an sich bekannten, elektronisch programmierbaren EEPROM-Stromkreis gebildet ist.

8. Schaltungsanordnung nach Anspruch 6 und 7, dadurch gekennzeichnet, dass die die Systemparameter durch Eingabe berücksichtigende Einheit (4) und der Charaktergenerator (7) über das Schienensystem (2) an die Tastatur (3) oder durch die Anwendung des Interface-Systems (5) an eine Floppy Disc, als Füllungsquelle, anschliessbar sind.

9. Schaltungsanordnung nach einem der Ansprüche 4 bis 8, dadurch gekennzeichnet, dass das Terminal zusätzlich alphanumerische Display-Elemente sowie eine 8-Bit-CPU aufweist.

**Claims**

1. Method for operating a universal multi-lingual selectable video terminal, during the operation of which a separate key for each basic letter as well as a space key are operable characterized in that for scripts with which vowels or accentuations are used as supplementary symbols arranged above or below consonants, the consonants or a form thereof are considered as individual basic letters while for the vowels, alternatively for each single accentuation a respective key is used, that circuits ensure that the consonant and the following vowel, alternatively the accentuation are generated in the same character region of the display if the relevant keys are operated immediately after each other and that by pressing the space key between the respective operation of the keys for a consonant and a vowel, alternatively for a further accentuation of the vowel, alternatively the further accentuation are shown in each case on a separate character region.

2. Method according to claim 1, characterized in that the letters without accent from scripts based on the Latin alphabet are considered as individual basic letters whereas for all types of accent used above or below the basic letters in each case a key is used.

3. Method according to claims 1 or 2, characterized in that by script types in which the letters of a large source of letters can be divided into letter elements, these letter elements are considered as individual basic letters wherein one of the keys considered for consonants, vowels alternatively accentuations is allocated to each basic letter by modifying the key face.

4. Circuit arrangement for carrying out the method according to one of the claims 1 to 3 for the realization of a multi-lingual video terminal, comprising, a central controlling means (1) attached to a in particular parallel formed bus system (2), a keyboard (3), means (4) for memorizing the system parameters, an interface system (5), a video control (6), a character generator (7), a video processor (8) attached to the character generator (7) and the video control (6) and a monitor connected with the video processor (8) characterized in that the video control (6) includes a character extender (19), which ensures the display of a character belonging to a code (script type) in two adjacent character regions, and a character adder (20), which are attached to the bus system (2) via a CRT controller (18) and to the character generator (17) via a selector (21) and that additionally the character adder (20) is also connected directly with the video processor (8).

5. Circuit arrangement according to claim 4, characterized in that the basic element of the video control (6) is formed from two common and also separate programmable CRT controllers (18), the CRT controllers (18) comprising LSI circuits.

6. Circuit arrangement according to claim 4, characterized in that the unit (4) for considering the system parameters by inputting comprises as a memory element a known electronic programmable EEPROM circuit.

7. Circuit arrangement according to claim 4, characterized in that the memory element of the character generator (7) is formed from a known electronic programmable EEPROM circuit.

8. Circuit arrangement according to claim 6 and 7, characterized in that the unit (4) for taking account of the system parameters by inputting and the character generator (7) is connectable with the keyboard (3) via the bus system (2) or to a floppy disc by use of the interface system (5), as data source.

9. Circuit arrangement according to one of the claims 4 to 8, characterized in that the terminal has additionally alpha numeric display elements as well as an eight-bit CPU.

## Revendications

1. Procédé pour la réalisation d'un terminal vidéo universel pouvant utiliser au choix plusieurs langues et lors du fonctionnement duquel un bouton-poussoir séparé pour chaque caractère de base ainsi qu'un bouton-poussoir, d'espacement peuvent être actionnés, caractérisé en ce que, dans le cas d'écritures dans lesquelles des voyelles ou des accentuations sont utilisées sous la forme de signes de complément qui sont disposés au-dessus ou en dessous de consonnes, les consonnes ou une forme de représentation de celles-ci sont considérées comme des caractères de base indépendants, alors que, pour les voyelles ou pour une accentuation, on utilise respectivement un bouton-poussoir, en ce que des circuits électriques font en sorte que la consonne et la voyelle ou l'accentuation suivante, lorsque les boutons-poussoirs correspondants sont actionnés directement à la suite, soient engendrées lors de l'affichage dans la même zone de caractère, et en ce que, lors de l'enfoncement du bouton-poussoir d'espacement entre les actionnements correspondants des boutons-poussoirs pour une consonne et une voyelle ou bien pour une autre accentuation, la voyelle ou l'autre accentuation sont représentées respectivement sur une zone de caractère séparée.

2. Procédé selon la revendication 1, caractérisé en ce que, pour des écritures basées sur la police latine de caractères, les caractères sans accent sont considérés comme des caractères de base indépendants tandis que, pour tous les types d'accents disposés au-dessus ou en dessous des caractères de base, à chaque fois un bouton-poussoir est utilisé.

3. Procédé selon une des revendications 1 ou 2, caractérisé en ce que, pour des types d'écritures dans lesquels les caractères d'une police contenant un grand nombre de caractères peuvent être décomposés en éléments de caractères, ces éléments de caractères sont considérés comme des caractères de base indépendants, auquel cas, à chaque caractère de base est associé, par modification des chapeaux de boutons-poussoirs, un bouton-poussoir affecté à une consonne, une voyelle ou une accentuation.

4. Agencement pour la mise en œuvre du procédé selon une des revendications 1 à 3 pour la réalisation d'un terminal vidéo pour plusieurs langues, comportant un dispositif de commande centrale (1) relié à un système de bus (2) agencé notamment en parallèle, un clavier à touches (3), une unité (4) mémorisant les paramètres du système, un système d'interface (5), une commande vidéo (6), un générateur de caractères (7), un processeur vidéo (8) relié au générateur de caractères (7) et à la commande vidéo (6) ainsi qu'un moniteur (9) relié au processeur vidéo, caractérisé en ce que la commande vidéo (6) contient un dispositif d'étalement de caractères (19), qui assure l'affichage d'un caractère associé à un code (type d'écriture) dans deux zones de caractères placées l'une à côté de l'autre et un additionneur de caractères (20), qui sont reliés, par l'intermédiaire d'un dispositif de contrôle à tube cathodique (18), au système de buse (2), et par l'intermédiaire d'un sélecteur (21), au générateur de caractères (7), et en ce qu'en outre l'additionneur de caractères (20) est également relié directement au processeur vidéo (8).

5. Agencement selon la revendication 4, caractérisé en ce que l'élément de base de la commande vidéo (6) est constitué par deux dispositifs de contrôle à tube cathodique (18) qui sont programmables en commun et également séparément, les dispositifs de contrôle à tube cathodique (18) contenant des circuits LSI.

6. Agencement selon la revendication 4, caractérisé en ce que l'unité (4) tenant compte des paramètres de système par leur introduction contient, comme élément de mémorisation, un circuit EEPROM programmable électroniquement et de type connu.

7. Agencement selon la revendication 4, caractérisé en ce que l'élément de mémorisation du générateur de caractères (7) est constitué par un circuit EEPROM, programmable électroniquement et d'un type connu.

8. Agencement selon les revendications 6 et 7, caractérisé en ce que l'unité (4) tenant compte des paramètres de système par leur introduction et le générateur de caractères (7) peuvent être reliés par l'intermédiaire du système de bus (2) au clavier à touches (3) ou bien par utilisation du système d'interface (5) à un disque souple, servant de source de remplissage.

9. Agencement selon une des revendications 4 à 8, caractérisé en ce que le terminal comporte additionnellement des éléments d'affichage alphanumérique ainsi qu'une unité centrale de traitement (CPU) à 8 bits.

Fig.1

Fig. 2.a

Fig. 2.b

Fig. 3

Fig. 4

0 103 740